Europäisches Patentamt

(19) European Patent Office

Office européen des brevets

(11) Numéro de publication : **0 078 050 B1**

(12) **FASCICULE DE BREVET EUROPÉEN**

(45) Date de publication du fascicule du brevet :
03.04.85

(21) Numéro de dépôt : **82109875.3**

(22) Date de dépôt : **26.10.82**

(51) Int. Cl.⁴ : **A 47 J 43/044**

(54) **Mixeur ménager.**

(30) Priorité : **28.10.81 FR 8120209**

(43) Date de publication de la demande :
**04.05.83 Bulletin 83/18**

(45) Mention de la délivrance du brevet :
**03.04.85 Bulletin 85/14**

(84) Etats contractants désignés :
**AT BE CH DE IT LI NL SE**

(56) Documents cités :
**DE-B- 1 174 949**
**FR-A- 1 117 914**
**FR-A- 1 250 939**
**FR-A- 1 381 801**
**FR-A- 2 293 249**

(73) Titulaire : **MOULINEX S.A.**
**7 à 15, rue Jules-Ferry**
**F-93171 Bagnolet (FR)**

(72) Inventeur : **Brison, Marc Pierre**
**27, résidence du Printemps**
**F-50000 Saint-Lô (FR)**

(74) Mandataire : **May, Hans Ulrich**
**Thierschstrasse 27**
**D-8000 München 22 (DE)**

Jouve, 18, rue St-Denis, 75001 Paris, France

## Description

L'invention se rapporte aux mixeurs ménagers destinés, en particulier, à broyer des matières alimentaires immergées dans un liquide.

Elle concerne, plus précisément, un mixeur ménager qui comprend, d'une part, un bloc moteur adapté à être tenu à la main et comportant en sa partie inférieure un entraîneur rotatif et, d'autre part, un pied de mixage monté amovible sur ladite partie inférieure et renfermant un arbre vertical dont l'extrémité supérieure s'accouple avec ledit entraîneur et dont l'extrémité inférieure porte une hélice de mixage disposée sous une cloche ménagée à l'extrémité inférieure du pied, ladite hélice étant montée mobile en hauteur dans ledit pied entre une position haute, pour laquelle elle est située dans la cloche, et vers laquelle elle est sollicitée par des moyens de rappel élastique, et une position basse, pour laquelle elle est déportée vers le bas hors de ladite cloche à l'encontre desdits moyens de rappel.

Un mixeur ainsi réalisé est décrit dans le brevet FR-A-1 381 801. On sait que la possibilité de déplacement de l'hélice en hauteur dans le pied de mixage permet, après utilisation du mixeur et démontage de ce pied du bloc moteur, d'extraire cette hélice de cette cloche afin de faciliter le nettoyage.

On notera que, dans ce mixeur du brevet FR-A-1 381 801, l'hélice tourne à vitesse relativement faible, du fait que ce mixeur est destiné, en particulier, à être utilisé à sec, c'est-à-dire sans la présence d'un liquide.

D'autres mixeurs, en revanche, sont équipés d'une hélice ou couteau tournant à grande vitesse et sont alors principalement destinés à la préparation des potages. A cet effet, après cuisson des légumes dans l'eau, on homogénéise le potage en faisant fonctionner quelques instants le mixeur directement dans le récipient de cuisson. Au cours du brassage ainsi obtenu, les particules de légumes immergées dans l'eau sont amenées au contact de l'hélice et sont ainsi broyées. Un tel mixeur est décrit, par exemple, dans le brevet FR-A-1 117 914. Les mixeurs rapides de ce genre sont souvent dangereux du fait qu'il est possible de faire tourner l'hélice en dehors du liquide et que l'usager peut alors par inadvertance amener les doigts au contact de cette hélice.

Pour éviter ce danger, on a déjà proposé, comme par exemple dans le brevet FR-A-2 293 249, de prolonger vers le bas la paroi latérale de la cloche pour former autour de l'hélice une sorte de garde de protection, et de pratiquer cependant dans cette paroi des évidements permettant aux légumes de parvenir au contact de l'hélice broyeuse. Toutefois si les évidements sont trop étroits, certains morceaux de légumes, trop volumineux, ne passent pas dans ces évidements. Si, par contre, ces évidements sont assez larges pour laisser passer pratiquement tous les morceaux de légumes, ils permettent aussi un accès trop libre à l'hélice et le danger réapparaît.

On a aussi proposé, par exemple dans le brevet DE-B-1 174 949, qu'une telle cloche percée d'évidements soit montée mobile en hauteur par rapport à l'hélice, de sorte qu'elle vienne normalement entourer l'hélice lorsque le mixeur est extérieur au récipient de travail, et qu'elle se soulève lorsque son bord inférieur vient au contact du fond du récipient. Une telle disposition n'apporte cependant pas la sécurité d'utilisation souhaitable, puisque la cloche peut aussi être relevée par contact avec tout objet autre qu'un fond de récipient, par exemple avec un doigt de la main de l'usager.

L'invention a pour but de réaliser un mixeur à grande vitesse qui assure un broyage homogène et complet, tout en supprimant pratiquement tout danger pour l'usager.

Un mixeur selon l'invention comporte, de manière connue, une hélice montée mobile en hauteur dans le pied de mixage entre une position haute, pour laquelle elle est située dans la cloche, et vers laquelle elle est sollicitée par des moyens de rappel élastique, et une position basse, pour laquelle elle est déportée vers le bas hors de ladite cloche à l'encontre desdits moyens de rappel, et est caractérisé en ce que les moyens de rappel sont tels que, lorsque le pied est monté sur le bloc moteur, ils maintiennent l'hélice en position haute lorsque cette hélice tourne hors d'un liquide, tandis que, lorsque cette hélice tourne dans un liquide, ils autorisent cette hélice à se placer d'elle-même en la position basse, ce déplacement résultant d'un effet de vissage dans ledit liquide.

Ainsi, lorsque le mixeur est en condition de travail, c'est-à-dire plongé dans un liquide, la paroi latérale de la cloche ne constitue pas obstacle à la libre circulation des particules à broyer puisque l'hélice est alors située à un niveau inférieur au bord de cette paroi. Lorsque le mixeur est hors du liquide, l'hélice est au contraire protégée par la paroi latérale de la cloche qui l'entoure.

Les caractéristiques et avantages de l'invention ressortiront d'ailleurs de la description qui va suivre, à titre d'exemple, en référence au dessin annexé, dans lequel :

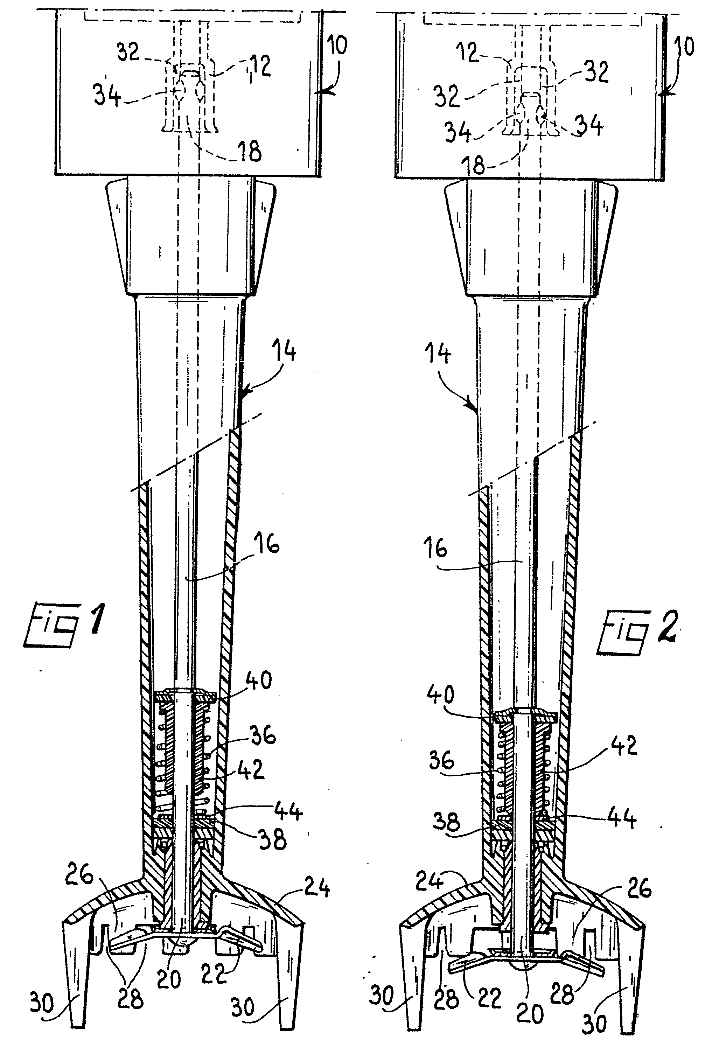

la figure 1 représente, partiellement en élévation, et partiellement en coupe, une forme de réalisation d'un mixeur selon l'invention avec l'hélice en position de sécurité ; la figure 2 est une vue analogue, mais avec l'hélice en position de mixage.

Ce mixeur comprend, d'une part, un bloc moteur 10 adapté à être tenu à la main et comportant en sa partie inférieure un entraîneur rotatif 12 tournant à grande vitesse et, d'autre part, un pied de mixage 14 monté de manière amovible sur ladite partie inférieure et renfermant un arbre vertical 16 dont l'extrémité supérieure 18 s'accouple avec l'entraîneur 12 et dont l'extrémité inférieure 20 porte une hélice de mixage 22 solidaire de cet arbre et disposée sous une cloche de protection 24 ménagée à l'extrémité inférieure du pied 14.

Cette cloche 24 comporte une paroi latérale 26 présentant une série d'évidements 28 en forme d'échancrures découpées dans le bord inférieur de cette paroi et réparties sur la périphérie. Cette paroi latérale porte en outre sur son bord au moins deux prolongements 30 espacés périphériquement et dirigés vers le bas. On notera que l'espace périphérique entre ces prolongements 30 est notablement supérieur à la largeur périphérique des échancrures 28.

L'accouplement en rotation de l'arbre 16 avec l'entraîneur 12 est assuré par un emmanchement laissant une possibilité de jeu axial de cet arbre par rapport à cet entraîneur.

Cet emmanchement est réalisé en ménageant, dans l'entraîneur, deux rainures axiales 32 diamétralement opposées et, sur l'arbre 16, deux oreilles 34 propres à s'engager librement dans ces rainures.

L'ensemble formé par l'arbre 16 et l'hélice 22 est monté mobile dans le pied 14 entre une position haute de sécurité (fig. 1), pour laquelle l'hélice 22 est située dans l'espace interne à la cloche 24, et vers laquelle cet ensemble est sollicité par des moyens de rappel élastique 36, et une position basse de mixage (fig. 2), pour laquelle l'hélice 22 est déportée vers le bas hors de la cloche 24, et en laquelle cet ensemble se place de lui-même, à l'encontre desdits moyens de rappel 36, lorsque l'hélice 22 tourne dans un liquide, ce déplacement résultant d'un effet de vissage de l'hélice dans ledit liquide.

Les moyens de rappel 36 sont constitués par un ressort hélicoïdal coaxial à l'arbre 16 et disposé entre un siège fixe 38 ménagé dans le pied 14 et un siège mobile 40 ménagé sur l'arbre 16. Entre le ressort 36 et l'arbre 16 est disposé un manchon 42 dont l'extrémité inférieure, pour la position basse de la figure 2, vient buter contre le siège 38 avec interposition d'une rondelle anti-frottement 44, définissant ainsi la limite inférieure de déplacement axial de l'arbre.

On notera que les prolongements 30 de la paroi latérale 26 de la cloche s'étendent vers le bas au-delà de l'hélice 22 en position basse de mixage, de manière que ces prolongements constituent des appuis propres à venir buter sur le fond d'un récipient contenant le liquide et à assurer ainsi un espacement convenable de l'hélice par rapport audit fond pendant le mixage.

On comprendra que, lorsque le mixeur est hors du liquide (fig. 1), l'hélice 22 est protégée latéralement par la paroi latérale 26 formée par la série de dents peu espacées laissées entre les évidements 28. Si alors l'usager met en marche le mixeur, il y a très peu de risque qu'il amène la main par inadvertance au contact de cette hélice.

Lorsque le mixeur est en condition de travail, c'est-à-dire plongé dans le liquide, l'hélice 22 est située à un niveau inférieur aux dents de la paroi 26. Les morceaux de légumes les plus gros peuvent librement passer entre les prolongements 30 pour atteindre cette hélice. Les particules les plus petites pourront passer, soit dans les échancrures 28, soit entre les prolongements 30.

## Revendications

1. Mixeur ménager destiné, en particulier, à broyer des matières alimentaires immergées dans un liquide et comprenant, d'une part, un bloc moteur (10) adapté à être tenu à la main et comportant en sa partie inférieure un entraîneur rotatif (12) tournant à grande vitesse et, d'autre part, un pied de mixage (14) monté amovible sur ladite partie inférieure et renfermant un arbre vertical (16) dont l'extrémité supérieure (18) s'accouple avec ledit entraîneur (12) et dont l'extrémité inférieure (20) porte une hélice de mixage (22) disposée sous une cloche (24) ménagée à l'extrémité inférieure du pied (14), ladite hélice (22) étant montée mobile en hauteur dans ledit pied (14) entre une position haute, pour laquelle elle est située dans la cloche (24), et vers laquelle elle est sollicitée par des moyens de rappel élastique (36), et une position basse, pour laquelle elle est déportée vers le bas hors de ladite cloche (24) à l'encontre desdits moyens de rappel (36), caractérisé en ce que les moyens de rappel (36) sont tels que, lorsque le pied (14) est monté sur le bloc moteur (10), ils maintiennent l'hélice (22) en position haute lorsque cette hélice tourne hors d'un liquide, tandis que, lorsque cette hélice tourne dans un liquide, ils autorisent cette hélice à se placer d'elle-même en la position basse, ce déplacement résultant d'un effet de vissage dans ledit liquide.

2. Mixeur selon la revendication 1, caractérisé en ce que, l'hélice (22) étant solidaire de l'arbre (16), et l'accouplement en rotation de cet arbre avec l'entraîneur (12) étant assuré par un emmanchement (32, 34) laissant une possibilité de jeu axial de cet arbre par rapport à l'entraîneur, ledit arbre (16) est monté mobile en hauteur dans le pied (14) entre deux positions pour lesquelles l'hélice (22) occupe respectivement sa position de sécurité et sa position de mixage.

3. Mixeur selon la revendication 2, caractérisé en ce que les moyens de rappel élastiques (36) sont constitués par un ressort hélicoïdal co-axial à l'arbre (16) et disposé entre deux sièges (38 et 40) ménagés respectivement dans le pied (14) et sur l'arbre (16).

4. Mixeur selon l'une quelconque des revendications précédentes, caractérisé en ce que la cloche (24) porte sur son bord des prolongements (30) périphériquement espacés, dirigés vers le bas, et s'étendant au-delà de l'hélice (22) en position de mixage, lesdits prolongements constituant ainsi des appuis propres à venir buter sur le fond d'un récipient contenant le liquide et à assurer un espacement de l'hélice (22) par rapport audit fond pendant le mixage.

5. Mixer selon la revendication 4, caractérisé en ce que, la paroi (26) de la cloche (24) présentant des évidements (28) répartis sur sa périphérie, l'espace périphérique entre les prolongements (30) constituant appuis est notablement supérieur à la largeur périphérique desdits évidements (28).

## Claims

1. A rod-type domestic mixer, in particular for mincing food immersed in a liquid, and comprising, on the one hand, a motor block (10) adapted to be held by the hand and including at its lower portion a rotary driving element (12) rotating at high speed, and on the other hand a mixing foot (14) removably mounted on the lower portion and surrounding a vertical shaft (16) whose top end (18) is coupled to the driving element (12) and whose bottom end (20) carries a mincing screw blade (22), said screw blade being disposed within a skirt portion (24) formed at the bottom end of the foot (14), the screw blade (22) being vertically movable in the foot (14) between an upper position, in which it is inside the skirt portion (24) and into which it is urged by means of a resilient return means (36), and a lower position, in which it is moved downwards out of the skirt portion (24) against the action of said return means (36), characterized in that the return means (36) is configured such that, when the foot (14) is assembled with the motor block (10), it retains the screw blade (22) in the upper position when the screw blade rotates outside of a liquid, whereas it enables said screw blade to automatically take the lower position when the screw blade rotates in a liquid, said displacement resulting from a screw effect within the liquid.

2. A rod-type domestic mixer as claimed in claim 1, characterized in that the screw blade (22) is fixedly coupled to the shaft (16) and that coupling of the shaft to the driving element (12) for rotation therewith is effected by a male coupling (32, 34) which allows said shaft some axial play relative to the driving element, the shaft (16) being mounted in the foot (14) for vertical movement between two positions in which the screw blade (22) takes its safety position and its mincing position, respectively.

3. A rod-type domestic mixer as claimed in claim 2, characterized in that the resilient return means (36) consists of a coil spring coaxial with the shaft (16), said coil spring being disposed between two seats (38 and 40) respectively formed in the foot (14) and on the shaft (16).

4. A rod-type domestic mixer as claimed in any of the preceding claims, characterized in that the periphery of the skirt portion (24) carries extensions (30) which are formed in circumferentially spaced relationship and depend downwardly and extend beyond the screw blade (22) in the mincing position thereof, so that they constitute regular abutments supported at the bottom of the liquid container and ensuring spacing of the screw blade (22) relative to the bottom during the mincing operation.

5. A rod-type domestic mixer as claimed in claim 4, characterized in that the wall (26) of the skirt portion (24) is formed with circumferentially spaced notches (28), the circumferential spacing between the abutment-forming extensions (30) being substantially greater than the circumferential width of said notches (28).

## Ansprüche

1. Haushaltsstabmixer, der besonders zum Zerkleinern von in einer Flüssigkeit eingetauchten Lebensmitteln bestimmt ist und einerseits einen Motorblock (10), der zum Halten mit der Hand ausgebildet ist und an seinem unteren Teil einen mit hoher Geschwindigkeit umlaufenden drehbaren Mitnehmer (12) aufweist, und andererseits einen Mixfuß (14) aufweist, der abnehmbar am unteren Teil montiert ist und eine senkrecht Welle (16) umschließt, deren oberes Ende (18) mit dem Mitnehmer (12) gekuppelt ist und deren unteres Ende (20) eine Mixschraube (22) trägt, die unter einer am unteren Ende des Fußes (14) ausgebildeten Glocke (24) angeordnet ist, wobei die Schraube (22) im Fuß (14) der Höhe nach beweglich ist zwischen einer oberen Stellung, in der sie sich in der Glocke (24) befindet und in welche sie durch eine elastische Rückstellvorrichtung (36) gedrückt wird, und einer unteren Stellung, in der sie gegen die Wirkung der Rückstellvorrichtung (36) nach unten aus der Glocke (24) vorgeschoben ist, dadurch gekennzeichnet, daß die Rückstellvorrichtung (36) so ausgebildet ist, daß sie, wenn der Fuß (14) am Motorblock (10) montiert ist, die Schraube (22) in der oberen Stellung hält, wenn sich die Schraube außerhalb einer Flüssigkeit dreht, dagegen, wenn sich diese Schraube in einer Flüssigkeit dreht, sie dieser Schraube ermöglicht, von selbst die untere Stellung einzunehmen, wobei diese Verschiebung das Ergebnis einer Schraubwirkung in der Flüssigkeit ist.

2. Haushaltsstabmixer nach Anspruch 1, dadurch gekennzeichnet, daß die Schraube (22) mit der Welle (16) fest verbunden ist und die drehfeste Kupplung dieser Welle mit dem Mitnehmer (12) durch eine Steckkupplung (32, 34) erfolgt, welche dieser Welle die Möglichkeit eines axialen Spiels bezüglich des Mitnehmers beläßt, wobei die Welle (16) im Fuß (14) der Höhe nach zwischen zwei Stellungen beweglich montiert ist, in welchen die Schraube (22) jeweils ihre Sicherheitsstellung und ihre Mixstellung einnimmt.

3. Haushaltsstabmixer nach Anspruch 2, dadurch gekennzeichnet, daß die elastische Rückstellvorrichtung (36) aus einer mit der Welle (16) gleichachsigen Schraubenfeder besteht, die zwischen zwei Sitzen (38 und 40) angeordnet ist, die jeweils im Fuß (14) und an der Welle (16) ausgebildet sind.

4. Haushaltsstabmixer nach einem der vorangehenden Ansprüche, dadurch gekennzeichnet, daß die Glocke (24) an ihrem Rand Verlängerungen (30) trägt, die in Umfangsrichtung in Abstand voneinander ausgebildet, nach unten gerichtet sind und sich über die in der Mixstellung befindliche Schraube (22) hinaus erstrecken, so daß sie regelrechte Anschläge bilden, welche sich am Boden eines die Flüssigkeit enthaltenden Gefäßes abstützen und einen Abstand der Schraube (22) bezüglich des Bodens während des Mixens sicherstellen.

5. Haushaltsstabmixer nach Anspruch 4, dadurch gekennzeichnet, daß die Wand (26) der Glocke (24) über ihren Umfang verteilt Aussparungen (28) aufweist, wobei der Umfangszwischenraum zwischen den Anschläge bildenden Verlängerungen (30) erheblich größer als die Umfangsbreite der Aussparungen (28) ist.

Fig 1

Fig 2